# FASCICULE DE BREVET EUROPEEN

(11) **EP 4 067 195 B1**
(45) Date de publication et mention de la délivrance du brevet: **12.07.2023**
(21) Numéro de dépôt: 22164709.2
(22) Date de dépôt: 28.03.2022
(51) Int. Cl.: B61D 17/10, B61D 27/00, B60H 1/00

(54) **SYSTÈME DE DIFFUSION D'AIR AU SEIN D'UN COMPARTIMENT PASSAGER D'UN VÉHICULE DE TRANSPORT**
SYSTEM ZUR LUFTVERTEILUNG IN EINEM PASSAGIERABTEIL EINES TRANSPORTFAHRZEUGS
SYSTEM FOR DISTRIBUTING AIR WITHIN A PASSENGER COMPARTMENT OF A TRANSPORT VEHICLE

(30) Priorité: 30.03.2021 FR 2103248
(43) Date de publication de la demande: 05.10.2022
(73) Titulaire: SpeedInnov, 75008 Paris (FR)
(72) Inventeur: BEAUSEIGNEUR, Christophe, 17540 Fontpatour de Vérines (FR)
(74) Mandataire: Lavoix

(56) Documents cités:
- EP-A2- 0 114 981
- EP-A2- 0 436 798
- JP-A- H06 344 905
- US-A- 2 027 097

## Description

La présente invention concerne un véhicule de transport avec un compartiment passager, comportant un système de diffusion d'air au sein dudit compartiment passager, le compartiment passager comprenant au moins deux zones de sièges passagers réparties de part et d'autre d'un couloir de circulation passager, lesdites au moins deux zones de sièges passagers étant surélevées sur une estrade par rapport au plancher du couloir de circulation, le couloir de circulation, cheminant du fond du compartiment passager vers l'entrée du compartiment passager, et étant délimité par rapport à chaque estrade au moyen d'un profilé placé sur chaque bord longitudinal dudit couloir de circulation, le plancher d'une estrade reposant partiellement sur la surface supérieure du profilé associé, et opposée à la base du profilé en contact avec le plancher du couloir de circulation, le système de diffusion étant propre à souffler de l'air traité le long de la face localisée au-dessus de baies vitrées du compartiment passager.

Un tel véhicule de transport de passagers (i.e. transport en commun) correspond notamment à un véhicule ferroviaire, un bus, un tramway, un navire, un avion ou tout autre véhicule configuré pour transporter une pluralité de passagers et comprenant un couloir de circulation séparant longitudinalement au moins deux zones de sièges passagers.

Un tel véhicule est par exemple connu du Document EP 0 436 798 A2.

Dans le domaine du transport de passagers, notamment ferroviaire, il est connu d'utiliser un principe de diffusion d'air consistant à souffler de l'air traité le long de la face au-dessus des baies vitrées d'un compartiment passager de véhicule de transport. Cependant, une telle diffusion d'air au-dessus des baies, si elle permet un brassage de l'air performant au niveau des estrades, induit une zone thermiquement morte dans le couloir de circulation passager.

En effet, des simulations montrent une stagnation du flux d'air dans le couloir et des gradients thermiques relativement importants entre le couloir et les estrades, la température de paroi du plancher de couloir pouvant alors être très basse de l'ordre de 2 à 3°C pour une température extérieure de -20°C, induit en conséquence de l'inconfort pour les passagers.

Pour augmenter la température au niveau du couloir, une solution connue consiste à ajouter un plancher chauffant où des résistances permettent de maintenir les planchers à la température souhaitée. Une telle solution ne donne cependant pas entière satisfaction, car son coût est parfois bloquant pour introduire un tel composant, et sa complexité d'intégration n'est pas compatible lorsqu'une modularité de l'aménagement du compartiment passager est requise impliquant un couloir mouvant (i.e. en translation) en fonction des besoins, notamment de la classe de confort du compartiment passager (e.g. première classe, seconde classe de confort passager). En effet, changer la position du couloir de circulation rend complexe l'intégration de câblage des panneaux de plancher chauffant et induirait du mou dans les câblages, ce qui n'est pas souhaitable.

Une autre solution consisterait à souffler de l'air traité dans le couloir et impliquerait l'ajout de tuyaux et de gaines supplémentaires mais cette solution ne donne pas non plus entière satisfaction en termes d'encombrement et de poids associé.

Un objectif de la présente invention est donc d'améliorer la diffusion d'air au sein compartiment passager afin d'améliorer le confort passager associé.

A cet effet, l'invention a pour objet un véhicule de transport avec un compartiment passager, comportant un système de diffusion d'air au sein dudit compartiment passager, le compartiment passager comprenant au moins deux zones de sièges passagers réparties de part et d'autre d'un couloir de circulation passager, lesdites au moins deux zones de sièges passagers étant surélevées sur une estrade par rapport au plancher du couloir de circulation, le couloir de circulation, cheminant du fond du compartiment passager vers l'entrée du compartiment passager, et étant délimité par rapport à chaque estrade au moyen d'un profilé placé sur chaque bord longitudinaux dudit couloir de circulation, le plancher d'une estrade reposant partiellement sur la surface supérieure du profilé associé, et opposée à la base du profilé en contact avec le plancher du couloir de circulation, le système de diffusion étant propre à souffler de l'air traité le long de la face localisée au-dessus de baies vitrées du compartiment passager, dans lequel ledit système de diffusion est configuré pour prélever une partie de l'air traité propre à être soufflé le long de la face localisée au-dessus des baies vitrées du compartiment passager, et réinjecter cette partie à travers chaque profilé propre à diffuser la partie prélevée d'air traité au sein du couloir de circulation

Le véhicule selon l'invention peut comprendre l'une ou plusieurs des caractéristiques suivantes, prise(s) isolément ou suivant toute combinaison techniquement possible :
- chaque profilé comprend, sur toute la longueur du profilé, un séparateur propre à diviser la section transversale du profilé en une partie supérieure dédiée à la circulation d'air traité prélevé, et une partie inférieure à la base du profilé en contact avec le plancher du couloir de circulation, la partie inférieure étant dédiée à la fixation dudit profil ;
- ledit séparateur est un voile interne audit profilé ;
- chaque profilé comprend une zone de diffusion de la partie prélevée d'air traité au sein du couloir de circulation,
   la zone de diffusion étant localisée à proximité de l'entrée du compartiment passager, ou localisée à proximité du fond du compartiment passager, de sorte que pour deux profilés encadrant un même couloir de circulation, l'un des deux profilés présente une zone de diffusion localisée à proximité de l'entrée du compartiment passager, et l'autre des deux profilés présente une zone de diffusion localisée à proximité du fond du compartiment passager,
   la zone de diffusion comprenant une pluralités d'orifices dont une dimension d'ouverture est sensiblement égale à 5mm, la pluralité d'orifices étant répartis sur une longueur de la zone de diffusion sensiblement égale à 1500mm, la surface de la zone de diffusion étant sensiblement égale à 0,01 m² ;
- la partie d'air prélevée et réinjectée au sein du couloir de circulation représente entre 3 et 6% du flux total d'air traité produit par le système de diffusion d'air selon la présente invention ;
- le système comprend, de chaque côté du fond du compartiment passager, une virole d'arrivée du flux d'air traité à diffuser, la virole étant localisée en zone supérieure du fond du compartiment passager, et comprend, en sortie de chaque virole, tout en étant localisée avant l'entrée de gaines de salle propres à souffler de l'air traité le long de la face localisée au-dessus des baies vitrées du compartiment passager, une conduite de prélèvement configurée pour contraindre la partie d'air prélevée à descendre le long d'une gaine de reprise et/ou le long d'un abat-son localisé(s) en fond de compartiment passager, jusqu'à chaque profilé métallique du couloir de circulation respectivement ;
- ladite conduite de prélèvement comprend à au moins une extrémité une zone de raccord souple à ladite virole et/ou audit profilé métallique du couloir de circulation respectivement ;
- chaque profilé est en aluminium et présente une section pyramidale ;
- la position et/ou la forme dudit couloir de circulation au sein dudit compartiment passager est modulable, la forme pouvant correspondre au moins à un rectangle ou à un Y ;
- le véhicule de transport est un véhicule de transport à deux étages, et dans lequel le système de diffusion d'air est configuré pour être installé dans un compartiment passager correspondant à une salle basse dudit véhicule de transport.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- **[****Fig 1****]** la figure 1 est une représentation schématique en perspective d'un système de diffusion d'air selon la présente invention;
- **[****Fig 2****]** la figure 2 est une représentation schématique d'une coupe transversale des profilés métalliques placés de part et d'autre d'un couloir de circulation passager;
- **[****Fig 3****]** la figure 3 est une représentation schématique d'un agrandissement d'une première partie du système de diffusion d'air de la figure 1 localisée à proximité de l'entrée d'un compartiment passager de véhicule de transport;
- **[****Fig 4****]** la figure 4 est une représentation schématique d'un agrandissement d'une deuxième partie du système de diffusion d'air de la figure 1 localisée en fond de compartiment pour illustrer la localisation du prélèvement d'air réinjecté ensuite à travers chaque profilé illustré par la figure 2 ;
- **[****Fig 5****]** la figure 5 est une représentation schématique d'une vue arrière du système de diffusion d'air illustré par la figure 1.

Dans la suite de la description, l'expression « sensiblement égal à » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

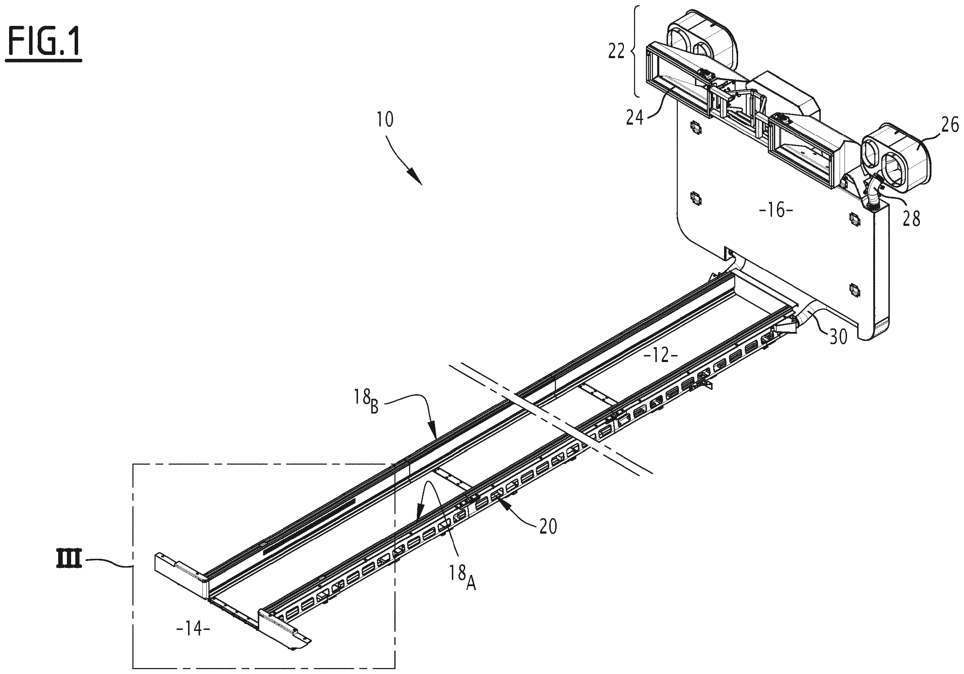

Un système 10 de diffusion d'air d'un véhicule de transport avec un compartiment passager selon la présente invention est illustré sur la figure 1. Un tel système 10 est installé au sein d'un compartiment passager, non représenté, du véhicule de transport, non représenté. Un tel compartiment passager comprend un couloir 12 de circulation passager, au moins deux zones de sièges passagers, non représentées, étant réparties de part et d'autre de ce couloir de circulation 12, lesdites au moins deux zones de sièges passagers étant surélevées sur une estrade, non représentée, par rapport au plancher du couloir de circulation 12.

En particulier, le véhicule de transport, non représenté, est un véhicule de transport à deux étages, et le système de diffusion d'air 10 selon la présente invention est configuré pour être installé dans un compartiment passager correspondant à une salle basse dudit véhicule de transport, par exemple un véhicule ferroviaire de train à grande vitesse.

Le couloir de circulation 12 chemine de l'entrée 14 du compartiment passager vers le fond 16 du compartiment passager, et est délimité par rapport à chaque estrade, non représentée, au moyen d'un profilé 18_{A} et 18_{B} (i.e. longrine) placé sur chacun de ses bords longitudinaux, le plancher d'une estrade reposant partiellement sur la surface supérieure du profilé associé, la surface de repos de l'estrade étant opposée à la base du profilé 18_{A},18_{B} en contact avec le plancher du couloir de circulation 12.

Selon un aspect particulier, la position et/ou la forme du couloir de circulation 12 au sein dudit compartiment passager est modulable, la forme pouvant correspondre au moins à un rectangle ou à un Y, en fonction des besoins, notamment de la classe de confort du compartiment passager considéré (e.g. première classe, seconde classe de confort passager).

Comme illustré par la figure 1, chaque profilé 18a, et 18_{B} présente sur la face extérieure côté estrade (i.e. et non côté couloir de circulation 12) une partie basse ajourée de trous 20 pour permettre le passage des outils nécessaires à leur fixation.

En fond 16 de compartiment passager, le système 10 de diffusion d'air selon la présente invention comprend, en zone supérieure, par rapport au plancher du couloir de circulation 12, de chaque côté, un ensemble 22 de tuyauterie, habituellement invisible des passagers, car masqué par un habillage de compartiment passager non représenté.

Chaque ensemble 22 de tuyauterie comprend une bouche 24 de diffusion propre à souffler de l'air traité le long de la face localisée au-dessus de baies vitrées, non représentées du compartiment passager, ce qui crée des « tonneaux » aérauliques au-dessus de chaque estrade de zone de siège passager. Une telle diffusion d'air traité mise en oeuvre par la bouche 24 est favorable au brassage de l'air dans les zones de sièges passagers mais induit une zone thermiquement morte (i.e. dépourvue de brassage) dans le couloir 12.

Chaque ensemble 22 de tuyauterie comprend en outre une virole 26 d'arrivée du flux d'air traité à diffuser au sein du compartiment passager, la virole 26 étant placée en amont de gaines de salle, non représentées, propres à faire circuler le flux d'air traité reçu par la virole 26 jusqu'à la bouche 24 de diffusion précitée.

Selon la présente invention, la virole 26 d'arrivée du flux d'air traité à diffuser, comprend, en sortie, tout en étant localisée avant l'entrée de gaines de salle propres à souffler, via la bouche de diffusion 24, de l'air traité le long de la face localisée au-dessus des baies vitrées du compartiment passager, une conduite 28 de prélèvement configurée pour prélever une partie de l'air traité propre à être soufflé le long de la face localisée au-dessus des baies vitrées du compartiment passager et contraindre cette partie d'air prélevée à descendre le long d'une gaine de reprise, non représentée et/ou le long d'un dispositif de type abat-son, non représenté, localisé(s) en fond 16 de compartiment passager, jusqu'à chaque profilé 18_{A}, 18_{B} du couloir de circulation 12 respectivement, notamment via une zone de raccord 30 représentée en fond 16 de compartiment.

Autrement dit, selon la présente invention, le système de diffusion 10 est configuré pour prélever une partie de l'air traité propre à être soufflé le long de la face localisée au-dessus des baies vitrées du compartiment passager, et réinjecter cette partie à travers chaque profilé 18a, ou 18_{B} propre à diffuser la partie prélevée d'air traité au sein du couloir de circulation 12.

Ainsi, la présente invention propose d'utiliser les profilés 18_{A}, 18_{B} de couloir de circulation 12 comme des canalisations.

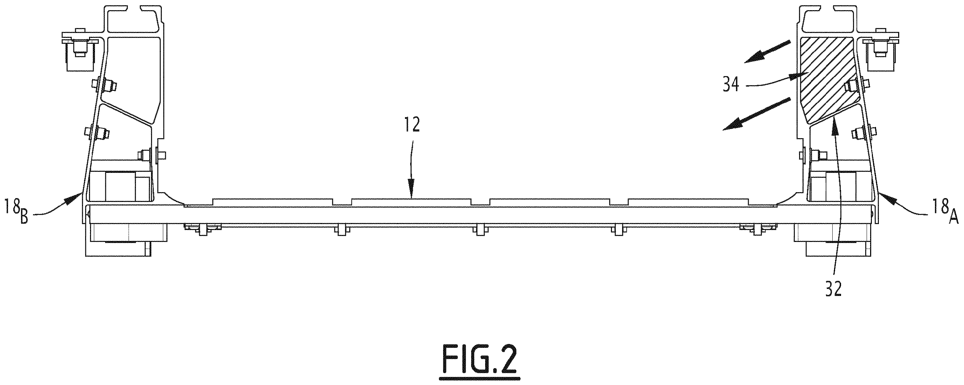

Tel qu'illustré par la figure 2, chaque profilé 18a, ou 18_{B} est par exemple un profilé métallique, notamment un profilé en aluminium, et présente une section pyramidale (i.e. dont la taille de section diminue lorsque la hauteur par rapport au sol croît) dont seule la partie basse est ajourée de trous 20 pour permettre le passage des outils nécessaires à leur fixation.

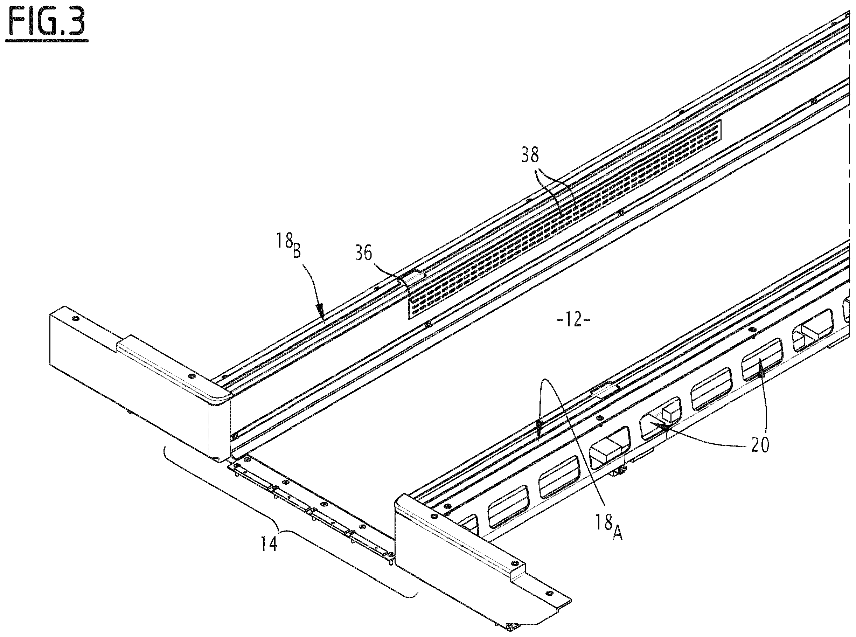

Selon un aspect particulier de la présente invention, chaque profilé 18_{A}, 18_{B} comprend, sur toute la longueur du profilé 18_{A}, 18_{B} considéré, un séparateur 32 propre à diviser la section transversale du profilé en une partie supérieure 34 dédiée à la circulation d'air traité prélevé, et une partie inférieure (i.e. sous le séparateur 32) à la base du profilé 18_{A}, 18_{B} en contact avec le plancher du couloir de circulation 12, la partie inférieure étant dédiée à la fixation du profil métallique 18_{A}, 18_{B} considéré. Comme illustré par la suite par la figure 3 décrite ci-après l'air circulant au sein de la partie supérieure 34 est ensuite propre à être diffusé, tel qu'illustré par les deux flèches de la figure 2, par chaque profilé 18_{A}, 18_{B} vers l'intérieur du couloir de circulation 12.

Le séparateur est notamment installé selon une inclinaison non nulle par rapport à la surface plane du plancher du couloir de circulation 12.

L'inclinaison du séparateur est configurée pour assurer une section de taille prédéterminée de la partie supérieure 34 ainsi cloisonnée, et présente par exemple un angle d'inclinaison compris entre 45° et 90°.

Par exemple, la surface hachurée d'une section de la partie supérieure 34, qui parcoure longitudinalement l'ensemble de chaque profilé 18_{A}, 18_{B}, est comprise entre 20 cm² et 50 cm², de préférence sensiblement égale à 30cm², avec une largeur de section de l'ordre de 50 mm environ, et une hauteur maximale de l'ordre de 60 mm environ, la hauteur cumulée, de la partie supérieure 34 dédiée à la circulation d'air traité prélevé, et de la partie inférieure (i.e. sous le séparateur 32) à la base du profilé 18_{A}, 18_{B} en contact avec le plancher du couloir de circulation 12 dédiée à la fixation du profil métallique 18_{A}, 18_{B} considéré, étant comprise entre 120 mm et 150 mm, par exemple sensiblement égale à 136mm. En particulier, un tel séparateur 32 est un voile interne au profilé 18_{A}, 18_{B} considéré, un tel voile créant une canalisation (i.e. une cavité fermée par fermeture via le séparateur 32 de la partie supérieure du profilé 18_{A}, 18_{B}) dans lequel la partie prélevée d'air traité est propre circuler, et permettant, malgré la présence de trous de fixation 20 en partie basse, d'utiliser chaque profilé 18_{A}, 18_{B} comme un diffuseur d'air au sein du couloir de circulation 12. Un tel séparateur 32 (i.e. voile interne) est notamment du même matériau que celui du profilé 18_{A}, 18_{B}, à savoir par exemple de l'aluminium.

La figure 3 est une représentation schématique d'un agrandissement d'une première partie III du système de diffusion d'air de la figure 1 localisée à proximité de l'entrée 14 d'un compartiment passager de véhicule de transport.

En particulier, la figure 3 illustre que chaque profilé 18_{A}, 18_{B} comprend une zone 36 de diffusion de la partie prélevée d'air traité au sein du couloir 12 de circulation. Une telle zone 36 est notamment localisée sur la paroi du profilé en contact avec le couloir de circulation 12.

Plus précisément, la zone de diffusion 36 est localisée à proximité de l'entrée 14 du compartiment passager comme illustré sur la figure 3 pour le profilé 18_{B}, ou localisée à proximité du fond 16 du compartiment passager, de manière non représentée pour le profilé 18_{A}, de sorte que pour les deux profilés métalliques 18_{A}, 18_{B} encadrant le couloir de circulation 12, l'un des deux profilés métalliques, à savoir ici le profilé 18_{B}, présente une zone de diffusion 36 localisée à proximité de l'entrée 14 du compartiment passager, et l'autre des deux profilés, à savoir ici le profilé 18_{A}, présente une zone de diffusion 36, non représentée, localisée à proximité du fond 16 du compartiment passager. Une telle répartition en quinconce des deux zones de diffusion 36 au sein du couloir de circulation 12 (i.e. une zone de diffusion 36 à proximité de l'entrée pour le profilé 18_{B} et une zone de diffusion 36 à proximité du fond 16 pour le profilé 18_{A}) permet de limiter la perte de débit en essayant de souffler en continu, alors que le besoin primordial est de réchauffer l'entrée 14 et le fond 16 du couloir de circulation 12.

La zone de diffusion 36 comprend une pluralité d'orifices 38 dont une dimension d'ouverture (i.e. taille de la section de passage de l'air diffusé), notamment la hauteur d'orifice (i.e. rainure) par rapport au plancher du couloir de circulation 12, est de préférence sensiblement égale à 5mm, la pluralité d'orifices 38 étant répartis sur une longueur de la zone de diffusion 36 sensiblement égale à 1500mm, la surface de la zone de diffusion 36 étant de préférence sensiblement égale à 0,01m².

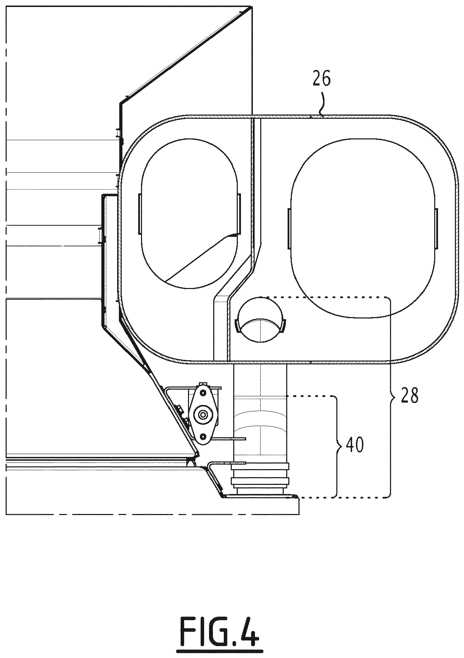

La figure 4 illustre le prélèvement d'une partie de l'air traité propre à être soufflé dans un espace supérieur du compartiment passager, le long de la face localisée au-dessus de baies vitrées du compartiment passager, pour réinjection de cette partie prélevée d'air traité dans un espace inférieur du compartiment passager et, selon la présente invention, à travers chaque profilé 18a, ou 18_{B} propre à diffuser la partie prélevée d'air traité au sein du couloir de circulation.

En particulier, selon la présente invention, la partie d'air prélevée et réinjectée au sein du couloir de circulation représente entre 3 et 6% du flux total d'air traité produit par le système de diffusion d'air selon la présente invention.

Ainsi, en plus du soufflage, en espace supérieur du compartiment passager, de l'air traité sur les baies vitrées, souffler, selon la présente invention, de l'air dans le couloir permet d'augmenter les températures de paroi et diminuer les gradients verticaux.

Par exemple, le flux prévu pour la salle d'un compartiment passager est de 900m³/h par côté (i.e. via chacune des deux bouches de diffusion 24 représentée sur la figure 1). En prélevant, selon la présente invention, 50m³/h par côté et en les soufflant sur le plancher via les profilés métalliques 18_{A}, 18_{B} de couloir de circulation 12, on augmente notablement les températures de paroi du couloir de circulation 12 et donc le confort thermique associé, et ce en évitant d'avoir recours à un plancher chauffant. Le principe de soufflage par le couloir, selon la présente invention, est donc performant.

Pour ce faire, tel qu'illustré sur la figure 4, une partie du flux d'air traité salle est, comme indiqué précédemment prélevée pour l'injecter dans le couloir de circulation 12. Cette ponction, notamment de 50m³/h, est, selon la présente invention directement réalisée en sortie de virole 26, avant les gaines de salles tel qu'illustré par la figure 4, où par un système de tuyauterie, on oblige une partie du flux à descendre dans une conduite 28 de prélèvement le long de la gaine de reprise/abat-son. Ainsi, selon la présente invention, on introduit une fonction additionnelle au sein de la gaine de reprise/abat-son, à savoir de participer au prélèvement, à l'acheminement vertical et à la réinjection de la partie d'air prélevée, de la virole 26 localisée dans l'espace supérieur du compartiment passager, jusqu'aux profilés métalliques 18_{A}, 18_{B} de couloir de circulation 12.

Selon un aspect particulier, la conduite 28 de prélèvement présente en partie basse une zone de raccord souple 40 pour permettre un raccord avec les profilés métalliques 18_{A}, 18_{B}. Une telle zone de raccord souple 40 correspond notamment à un manchon souple en accordéon.

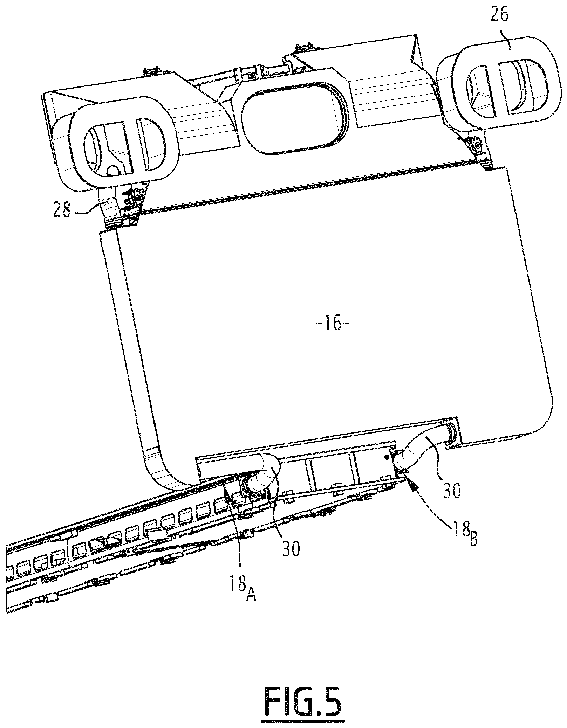

La figure 5 est une représentation schématique partielle d'une vue arrière du système de diffusion d'air illustré par la figure 1 et illustre la descente depuis chacune des deux viroles 26, via la conduite 28 de prélèvement associée descendant à travers la gaine de reprise/abat-son du fond 16 de compartiment passager, jusqu'aux zones de raccord 30 pour alimenter chaque profilé 18_{A}, 18_{B} du couloir de circulation 12 respectivement. Chaque zone de raccord 30 alimentant chaque profilé 18_{A}, 18_{B} correspond à l'extrémité inférieure (i.e. localisée dans l'espace inférieur du compartiment passager) de la conduite 28 de prélèvement. Selon un aspect particulier, une telle zone de raccord 30 alimentant un profilé 18a, ou 18_{B} est une zone de raccord souple correspondant notamment à un manchon souple en accordéon.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi d'améliorer le confort climatique des passagers sans introduire de tuyaux supplémentaires, et aussi d'éviter d'ajouter un plancher chauffant pour répondre aux exigences de confort climatique.

Autrement dit, la présente invention, résout le problème de confort thermique, contient les coûts en évitant l'ajout d'un plancher chauffant, et limite drastiquement le nombre de pièces ajoutées puisque l'on utilise les composants déjà présents (profilés de couloirs de circulation (i.e. longrines)) auquel une nouvelle fonctionnalité est ajoutée.

La présente invention permet ainsi de supprimer le point froid sur les panneaux de plancher du couloir de circulation 12 sans ajout de plancher chauffant, de limiter le nombre de pièces supplémentaires nécessaires en utilisant de composants déjà présents pour d'autres fonctions.

La présente invention, permet en outre un concept de flux aéraulique n'imposant pas de transfert d'air entre la salle (i.e. la salle du compartiment passager) et une plateforme (i.e. sas d'entrée/sortie passager à bord du véhicule de transport), ce qui évite d'avoir un jeu important de l'ordre de 15 à 20mm sous la porte d'entrée salle (i.e. d'accès au compartiment passager à partir de la plateforme), un tel jeu étant néfaste au confort acoustique de la salle.

Ainsi, utiliser les profilés 18_{A}, 18_{B} de couloir comme diffuseur d'air permet d'éviter l'ajout de gaines supplémentaires, sous les estrades des zones de sièges passagers, pour diffuser dans le couloir tout en apportant une nette amélioration des températures de paroir du couloir de circulation 12, similaire à celle constaté avec un plancher chauffant mais sans les contraintes et le coût associé à une telle solution. Autrement dit, cette innovation permet d'atteindre le confort thermique requis sans ajouter un plancher chauffant qui est une solution coûteuse.

## Revendications

1. Véhicule de transport avec un compartiment passager, comportant un système (10) de diffusion d'air au sein dudit compartiment passager, le compartiment passager comprenant au moins deux zones de sièges passagers réparties de part et d'autre d'un couloir (12) de circulation passager, lesdites au moins deux zones de sièges passagers étant surélevées sur une estrade par rapport au plancher du couloir de circulation,
le couloir de circulation, cheminant de l'entrée (14) du compartiment passager vers le fond (16) du compartiment passager, et étant délimité par rapport à chaque estrade au moyen d'un profilé (18_{A}, 18_{B}) placé sur chaque bord longitudinal dudit couloir (12) de circulation, le plancher d'une estrade reposant partiellement sur la surface supérieure du profilé associé, et opposée à la base du profilé en contact avec le plancher du couloir de circulation,
le système de diffusion étant propre à souffler de l'air traité le long de la face localisée au-dessus de baies vitrées du compartiment passager,
**caractérisé en ce que** ledit système de diffusion est configuré pour prélever une partie de l'air traité propre à être soufflé le long de la face localisée au-dessus des baies vitrées du compartiment passager, et réinjecter cette partie à travers chaque profilé (18_{A}, 18_{B}) propre à diffuser la partie prélevée d'air traité au sein du couloir (12) de circulation.

2. Véhicule selon la revendication 1, dans lequel chaque profilé (18_{A}, 18_{B}) comprend, sur toute la longueur du profilé, un séparateur (32) propre à diviser la section transversale du profilé en une partie supérieure (34) dédiée à la circulation d'air traité prélevé, et une partie inférieure à la base du profilé en contact avec le plancher du couloir de circulation, la partie inférieure étant dédiée à la fixation dudit profil.

3. Véhicule selon la revendication 2, dans lequel ledit séparateur (32) est un voile interne audit profilé.

4. Véhicule selon l'une quelconque des revendications précédentes, dans lequel chaque profilé (18_{A}, 18_{B}) comprend une zone de diffusion (36) de la partie prélevée d'air traité au sein du couloir de circulation,
la zone de diffusion étant localisée à proximité de l'entrée du compartiment passager, ou localisée à proximité du fond du compartiment passager, de sorte que pour deux profilés encadrant un même couloir (12) de circulation, l'un des deux profilés présente une zone de diffusion localisée à proximité de l'entrée (14) du compartiment passager, et l'autre des deux profilés présente une zone de diffusion localisée à proximité du fond (16) du compartiment passager
la zone de diffusion (36) comprenant une pluralités d'orifices (38) dont une dimension d'ouverture est sensiblement égale à 5mm, la pluralité d'orifices étant répartis sur une longueur de la zone de diffusion sensiblement égale à 1500mm, la surface de la zone de diffusion étant sensiblement égale à 0,01 m².

5. Véhicule selon l'une quelconque des revendications précédentes, dans lequel la partie d'air prélevée et réinjectée au sein du couloir (12) de circulation représente entre 3 et 6% du flux total d'air traité produit par le système de diffusion d'air selon la présente invention.

6. Véhicule selon l'une quelconque des revendications précédentes, dans lequel le système comprend, de chaque côté du fond du compartiment passager, une virole (26) d'arrivée du flux d'air traité à diffuser, la virole étant localisée en zone supérieure du fond du compartiment passager, et comprend, en sortie de chaque virole, tout en étant localisée avant l'entrée de gaines de salle propres à souffler de l'air traité le long de la face localisée au-dessus des baies vitrées du compartiment passager, une conduite (28) de prélèvement configurée pour contraindre la partie d'air prélevée à descendre le long d'une gaine de reprise et/ou le long d'un abat-son localisé(s) en fond de compartiment passager, jusqu'à chaque profilé du couloir de circulation respectivement.

7. Véhicule selon la revendication 5, dans lequel ladite conduite (28) de prélèvement comprend à au moins une extrémité une zone de raccord (40) souple à ladite virole (26) et/ou audit profilé (18_{A}, 18_{B}) du couloir (12) de circulation respectivement.

8. Véhicule selon l'une quelconque des revendications précédentes, dans lequel chaque profilé (18_{A}, 18_{B}) est en aluminium et présente une section pyramidale.

9. Véhicule selon l'une quelconque des revendications précédentes, dans lequel la position et/ou la forme dudit couloir (12) de circulation au sein dudit compartiment passager est modulable, la forme pouvant correspondre au moins à un rectangle ou à un Y.

10. Véhicule selon l'une quelconque des revendications précédentes, dans lequel le véhicule de transport est un véhicule de transport à deux étages, et dans lequel le système de diffusion d'air est configuré pour être installé dans un compartiment passager correspondant à une salle basse dudit véhicule de transport.

## Patentansprüche

1. Transportfahrzeug mit einem Fahrgastraum, umfassend ein System (10) zur Luftverteilung innerhalb des Fahrgastraums, der Fahrgastraum umfassend mindestens zwei Fahrgastsitzbereiche umfasst, die auf beiden Seiten eines Gangs (12) für Fahrgastverkehr verteilt sind, wobei die mindestens zwei Fahrgastsitzbereiche auf einem Podest in Bezug auf den Fußboden des Laufgangs erhöht sind,
wobei der Laufgang, der von dem Eingang (14) des Fahrgastraums zum Fußboden (16) des Fahrgastraums verläuft und mittels eines Profils (18_{A}, 18_{B}), das an jedem Längsrand des Laufgangs (12) angeordnet ist, von jedem Podest begrenzt wird, wobei der Fußboden eines Podests teilweise auf der oberen Oberfläche des assoziierten Profils aufliegt und gegenüber der Basis des Profils mit dem Boden des Laufgangs in Kontakt ist, wobei das Verteilungssystem geeignet ist, um aufbereitete Luft entlang der Seite zu blasen, die sich über den Glasfenstern des Fahrgastraums befindet,
**dadurch gekennzeichnet, dass** das Verteilungssystem konfiguriert ist, um einen Teil der aufbereiteten Luft, die geeignet ist, um entlang der Seite zu geblasen zu werden, die sich über den Glasfenstern befindet, zu entnehmen, und diesen Teil durch jedes Profil (18_{A}, 18_{B}), das geeignet ist, um den entnommenen Teil der aufbereiteten Luft innerhalb des Laufgangs (12) zu verteilen, wieder einzuleiten.

2. Fahrzeug nach Anspruch 1, wobei jedes Profil (18_{A}, 18_{B}) über die gesamte Länge des Profils ein Trennelement (32) umfasst, die geeignet ist, um den Querschnitt des Profils in einen oberen Teil (34), der der Zirkulation von aufbereiteter Luft gewidmet ist, und einem unteren Teil an der Basis des Profils, der mit dem Fußboden des Laufgangs in Kontakt ist, wobei der untere Teil der Befestigung des Profils gewidmet ist, zu unterteilen.

3. Fahrzeug nach Anspruch 2, wobei das Trennelement (32) eine profilierte innere Schale des Profils ist.

4. Fahrzeug nach einem der vorherigen Ansprüche, wobei jedes Profil (18_{A}, 18_{B}) einen Verteilungsbereich (36) des entnommenen Teils der aufbereiteten Luft innerhalb des Laufgangs umfasst,
wobei sich der Verteilungsbereich in der Nähe des Eingangs des Fahrgastraums befindet oder sich in der Nähe des Fußbodens des Fahrgastraums befindet, sodass für zwei Profile, die denselben Laufgang (12) einrahmen, eines der zwei Profile einen Verteilungsbereich aufweist, der sich in der Nähe des Eingangs (14) des Fahrgastraums befindet, und das andere der zwei Profile einen Verteilungsbereich aufweist, der sich in der Nähe des Fußbodens (16) des Fahrgastraums befindet
der Verteilungsbereich (36) umfassend eine Vielzahl von Öffnungen (38) umfasst, deren Öffnungsgröße im Wesentlichen gleich 5 mm ist, wobei die Vielzahl von Öffnungen über eine Länge des Verteilungsbereichs verteilt ist, die im Wesentlichen gleich 1500 mm ist, wobei die Oberfläche des Verteilungsbereichs im Wesentlichen gleich 0,01 m² ist.

5. Fahrzeug nach einem der vorherigen Ansprüche, wobei der Teil der Luft, der entnommen und innerhalb des Laufgangs (12) wieder eingeleitet wird, zwischen 3 und 6 % des gesamten aufbereiteten Luftstroms ausmacht, der durch das Luftverteilungssystem gemäß der vorliegenden Erfindung erzeugt wird.

6. Fahrzeug nach einem der vorherigen Ansprüche, wobei das System auf jeder Seite des Fonds des Fahrgastraums einen Luftauslass (26) zur Ankunft des zu verteilenden aufbereiteten Luftstroms umfasst, wobei sich der Luftauslass im oberen Bereich des Fonds des Fahrgastraums befindet, und am Ausgang von jedem Luftauslass, der sich vor dem Eingang von Raumschächten befindet, die geeignet sind, um aufbereitete Luft entlang der Seite zu blasen, die sich über den Glasfenstern des Fahrgastraums befindet, eine Entnahmeleitung (28) umfasst, die konfiguriert ist, um den Teil entnommener Luft dazu zu zwingen, entlang eines Wiederaufnahmeschachts und/oder entlang einer Schalljalousie, die sich am Fond des Fahrgastraums befindet, bis zu jedem Profil des Verkehrsgangs abzusinken.

7. Fahrzeug nach Anspruch 5, wobei die Entnahmeleitung (28) an mindestens einem Ende einen flexiblen Verbindungsbereich (40) jeweils zu dem Luftauslass (26) und/oder dem Profil (18_{A}, 18_{B}) des Laufgangs (12) aufweist.

8. Fahrzeug nach einem der vorherigen Ansprüche, wobei jedes Profil (18_{A}, 18_{B}) aus Aluminium ist und einen pyramidenförmigen Querschnitt aufweist.

9. Fahrzeug nach einem der vorherigen Ansprüche, wobei die Position und/oder die Form des Laufgangs (12) für innerhalb des Fahrgastraums variabel ist, wobei die Form mindestens einem Rechteck oder einem Y entsprechen kann.

10. Fahrzeug nach einem der vorherigen Ansprüche, wobei das Transportfahrzeug ein zweistöckiges Transportfahrzeug ist und wobei das Luftverteilungssystem konfiguriert ist, um in einem Fahrgastraum installiert zu werden, der einem unteren Raum des Transportfahrzeugs entspricht.

## Claims

1. A transport vehicle with a passenger compartment, comprising an air diffusion system (10) within said passenger compartment, the passenger compartment comprising at least two passenger seating areas distributed on either side of a passenger traffic corridor (12), said at least two passenger seating areas being elevated on a platform with respect to the floor of the traffic corridor
the traffic corridor, running from the entrance (14) of the passenger compartment to the bottom (16) of the passenger compartment, and being delimited from each platform by means of a profile (18_{A}, 18_{B}) placed on each longitudinal edge of said traffic corridor (12) the floor of a platform resting partially on the upper surface of the associated profile, and opposite the base of the profile in contact with the floor of the traffic lane, the diffusion system being adapted to blow treated air along the face located above the glass windows of the passenger compartment,
**characterised in that** said diffusion system is configured to take a portion of the treated air suitable for being blown along the face located above the windows of the passenger compartment, and reinject this portion through each profile (18_{A}, 18_{B}) suitable for diffusing the taken portion of treated air within the traffic corridor (12).

2. Vehicle according to claim 1, wherein each profile (18_{A}, 18_{B}) comprises, along the entire length of the profile, a separator (32) suitable for dividing the cross-section of the profile into an upper part (34) dedicated to the circulation of treated air taken from it, and a lower part at the base of the profile in contact with the floor of the traffic lane, the lower part being dedicated to the fixing of said profile.

3. The vehicle of claim 2, wherein said separator (32) is an internal web to said profile.

4. A vehicle according to any one of the preceding claims, wherein each profile (18_{A}, 18_{B}) comprises a diffusion zone (36) for the removed portion of treated air within the traffic lane,
the diffusion zone being located in the vicinity of the entrance to the passenger compartment, or located in the vicinity of the bottom of the passenger compartment, so that for two profiles framing the same traffic corridor (12), one of the two profiles has a diffusion zone located in the vicinity of the entrance (14) to the passenger compartment, and the other of the two profiles has a diffusion zone located in the vicinity of the bottom (16) of the passenger compartment
the diffusion zone (36) comprising a plurality of orifices (38) with an opening dimension substantially equal to 5 mm, the plurality of orifices being distributed over a length of the diffusion zone substantially equal to 1,500 mm, the surface area of the diffusion zone being substantially equal to 0.01 m².

5. A vehicle according to any one of the preceding claims, wherein the portion of air taken and reinjected within the traffic corridor (12) represents between 3 and 6% of the total flow of treated air produced by the air diffusion system according to the present invention.

6. Vehicle according to any one of the preceding claims, in which the system comprises, on each side of the bottom of the passenger compartment, a duct (26) for the arrival of the flow of treated air to be diffused, the duct being located in the upper zone of the bottom of the passenger compartment, and comprises, at the outlet of each duct while being located before the entry of room ducts capable of blowing treated air along the face located above the windows of the passenger compartment, a sampling duct (28) configured to force the portion of air sampled to descend along a return duct and/or along a sound attenuator located at the bottom of the passenger compartment, as far as each profile of the circulation corridor respectively.

7. Vehicle according to claim 5, wherein said sampling duct (28) comprises at least at one end a flexible connection area (40) to said duct (26) and/or to said profile (18_{A}, 18_{B}) of the traffic corridor (12) respectively.

8. A vehicle according to any of the preceding claims, wherein each profile (18_{A}, 18_{B}) is made of aluminium and has a pyramidal cross-section.

9. A vehicle according to any one of the preceding claims, wherein the position and/or shape of said traffic corridor (12) within said passenger compartment is modulable, the shape being able to correspond at least to a rectangle or a Y.

10. A vehicle according to any of the preceding claims, wherein the transport vehicle is a double-decker transport vehicle, and wherein the air diffusion system is configured to be installed in a passenger compartment corresponding to a lower room of said transport vehicle.
